# EUROPÄISCHE PATENTSCHRIFT

(11) **EP 4 141 308 B1**
(45) Veröffentlichungstag und Bekanntmachung des Hinweises auf die Patenterteilung: **23.07.2025**
(21) Anmeldenummer: 21200328.9
(22) Anmeldetag: 30.09.2021
(51) Int. Cl.: F16L 23/04, F16L 27/10, F16L 27/12, F16L 47/18

(54) **ROHRVERBINDUNGSANORDNUNG**
PIPE CONNECTION ASSEMBLY
DISPOSITIF DE RACCORDEMENT DE TUYAUX

(30) Priorität: 25.08.2021 EP 21193033
(43) Veröffentlichungstag der Anmeldung: 01.03.2023
(73) Patentinhaber: Airbus Operations GmbH, 21129 Hamburg (DE)
(72) Erfinder: Klose, Markus, 21129 Hamburg (DE)
(74) Vertreter: Bird & Bird LLP - Hamburg

(56) Entgegenhaltungen:
- US-A- 3 669 472
- US-A- 4 249 786
- US-A1- 2016 153 597
- US-B1- 6 328 352

## Beschreibung

Die vorliegende Erfindung betrifft eine flexible Rohrverbindungsanordnung mit einem ersten Rohrstück und einem zweiten Rohrstück, die sich entlang einer Längsachse erstrecken, und mit einer Klemmschelle, wobei die Verbindungsanordnung so ausgestaltet ist, dass sie angulare und axiale Bewegungen der Rohrstücke relativ zueinander aufnehmen kann.

Insbesondere in Flugzeugen muss Frischwasser und Grauwasser im Bereich der Außenhaut entlanggeführt werden. Dadurch entsteht während des Fluges oder bei niedrigen Temperaturen am Boden die Gefahr des Vereisens, weshalb diese Leitungen mittels auf dem Rohr angebrachter elektrischer Heizleiter beheizt werden müssen. Die resultierenden starken Temperaturschwankungen führen dazu, dass sich die entsprechenden Leitungen thermisch ausdehnen bzw. zusammenziehen. Hinzu kommen Rumpfverformungen, die die Leitungen ebenfalls aufnehmen müssen. Dies wiederum erfordert, dass Verbindungsanordnungen zwischen einzelnen Rohrleitungsabschnitten derart ausgestaltet sind, dass sie sowohl gegenüber Längenänderungen der zusammengeführten Rohrleitungsabschnitte als auch gegenüber Änderungen des Winkels zwischen diesen (Angulation) tolerant sind und sich an dieser Stelle keine Spannungen oder Verformungen einstellen, wenn es im Bereich der Kupplung zu einer Längen- oder Winkeländerung kommt.

Diese Anforderung gilt in verstärktem Maße, wenn für statisch spannungsfreie Rohrleitungssysteme zur Gewichts- und Kosteneinsparung Kunststoffrohre statt der üblichen Metallrohre verwendet werden, weil Kunststoffrohre einen bis zu vier Mal höheren Wärmeausdehnungskoeffizienten aber eine geringere Steifigkeit aufweisen, sodass eine dauerhaft schmutzgeschützte, flexible und leichtgängige Kupplung benötigt wird, welche bei Druckbeaufschlagung nicht als Aktuator wirkt und axiale Kräfte entlang der Rohrachse aufbaut, welche damit das flexible Rohrmaterial zum Beulen aus der Achse veranlassen können. Dies wird dadurch erreicht, dass innerhalb der flexiblen Kupplung keine Volumenerhöhung und damit aus dem Wasserdruck resultierende Stempeleffekte auftreten - ein Aktuator-Effekt kann nur noch aus der Materialstärke der Rohrwandung resultieren und ist damit auf das technisch mögliche Minimum reduziert.

Aus dem Dokument US 6 328 352 B1 ist beispielsweise eine Rohrverbindung zweier Rohre mit zwei Dichtringen, einer Muffe und einem Haltering bekannt. Zur dichtenden Verbindung beider Rohre werden beide Rohre mit dem Haltering verbunden, wobei der Haltering für jeden Dichtring eine jeweils axial nach außen ragende V-förmige Wandung aufweist, die eine Nut für den Dichtring bildet. Der Haltering wird über die Muffe, die eine der V-förmigen Nut korrespondierende Nut aufweist, eingeklemmt, sodass eine dichte und feste Rohrverbindung entsteht.

Aus dem Dokument US 3 669 472 A, von der die vorliegende Erfindung ausgeht, ist eine Kupplungsvorrichtung zum Verbinden zweier Rohre bekannt, die eine hermetisch dichte Verbindung der Rohre herstellt. Die Kupplungsvorrichtung weist ein in axialer Richtung schließendes Gewindeelement mit einem Arretierelement auf, sodass ein unbeabsichtigtes Lösen des Gewindes verhindert wird. Die beiden Rohre weisen jeweils einen Flansch auf, wobei die Flansche durch einen Halteflansch mit Haltebacken zusammengehalten werden. Die Flansche werden durch eine Schraubhülle mit dem Gewindeelement verschraubt, wobei beim Verschrauben jeweils ein Dichtring zwischen dem Halteflansch und Endflächen der Schraubhülle eingeklemmt werden, um eine dichtende Verbindung herzustellen.

Weitere Rohrverbindungsanordnungen sind aus den Dokumenten US 2016/153597 A1 und US 4 249 786 A bekannt.

Damit eine Rohrverbindungsanordnung gegenüber Längen- und Winkeländerungen tolerant ist und diese aufnehmen kann, müssen Dichtungen, die an den miteinander verbundenen Rohrstücken anliegen, sowie die entsprechenden Dichtflächen an den Rohrstücken so ausgebildet sein, dass eine Relativbewegung zwischen den Dichtungen und den Rohrstücken möglich ist. Hierbei hat es sich in der Vergangenheit als problematisch herausgestellt, dass es gerade bei Grauwasser zu Ablagerungen von Schmutz im Bereich der Dichtflächen kommt, was wiederum dazu führt, dass die Dichtungen nicht mehr entlang der Dichtflächen gleiten können, sodass Längenveränderungen der Rohrleitungen nicht mehr zu einer Verschiebung der Rohrendstücke relativ zueinander im Bereich der Rohrverbindungsanordnung führen konnten.

Daher ist es ausgehend vom Stand der Technik die Aufgabe der vorliegenden Erfindung, eine Rohrverbindungsanordnung bereitzustellen, die so ausgestaltet ist, dass sie Längen- und Winkeländerungen der miteinander verbundenen Rohrleitungen aufnehmen kann, dabei zuverlässig dichtet und zudem vermieden wird, dass es in großem Umfang zu Schmutzablagerungen im Bereich von Dichtflächen kommt, entlang derer sich Dichtungen verschieben.

Erfindungsgemäß wird diese Aufgabe durch eine Rohrverbindungsanordnung gemäß Anspruch 1 gelöst.

Demnach weist eine erfindungsgemäße Rohrverbindungsanordnung ein erstes Rohrstück und ein zweites Rohrstück auf, die sich entlang einer gemeinsamen Längsachse erstrecken. Weiterhin weist die erfindungsgemäße Rohrverbindungsanordnung eine Klemmschelle auf, die ausgestaltet ist, die Rohrstücke an einer Bewegung voneinander weg zu hindern.

An dieser Stelle ist darauf hinzuweisen, dass die Rohrstücke Teil von Rohrleitungen sein können, beispielsweise deren Endabschnitte, wobei sich die gesamte Rohrleitung dann nicht auch entlang der Längsachse erstreckt, sondern in diesem Fall beispielsweise lediglich der jeweilige Endabschnitt. Erfindungsgemäß kommt es darauf an, dass die beiden Rohrstücke oder Abschnitte, die miteinander verbunden werden, entlang einer gemeinsamen Längsachse verlaufen. Erfindungsgemäß ist dies bereits dann der Fall, wenn die beiden Abschlussflächen der Rohrstücke, die im verbundenen Zustand einander gegenüber liegen, parallel zueinander verlaufen, sodass am Ende der beiden Rohrstücke die Achsen, entlang derer sie sich erstrecken, zusammenfallen. Auch in einem solchen Fall ist das Merkmal einer gemeinsamen Längsachse, wie es die vorliegende Erfindung erfordert, bereits verwirklicht. Ferner ist das Merkmal auch bereits dann verwirklicht, wenn die Abschnitte der miteinander verbundenen Rohleitungen, die von der Klemmschelle umgeben sind, sich entlang einer gemeinsamen Längsachse erstrecken. In diesem Fall werden die Rohrstücke durch die Abschnitte der Rohrleitungen gebildet, die von der Klemmschelle umschlossen sind.

Ferner sind bei der erfindungsgemäßen Verbindungsanordnung an den Rohrstücken Endflächen vorgesehen, die im verbundenen Zustand einander gegenüber liegen, aber nicht notwendigerweise auch an dem distalen Ende der Rohrstücke ausgebildet sind, sondern gegenüber dem jeweiligen freien Ende zurückversetzt sein können. Vorzugsweise verlaufen die Endflächen senkrecht zu der Längsachse, entlang derer sich die Rohrstücke erstrecken.

Außerdem ist an den Rohrstücken vorzugsweise eine von der jeweiligen Endfläche des Rohrstücks wegweisende Klemmfläche vorgesehen, die vorzugsweise ebenfalls senkrecht zu der Längsachse des jeweiligen Rohrstücks verläuft, und die Klemmschelle weist vorzugsweise eine erste und eine zweite Anlagefläche auf, die ausgestaltet sind, an den Klemmflächen der Rohrstücke anzuliegen, wobei die Klemmschelle ferner ausgestaltet ist, die Rohrstücke und vorzugsweise die Klemmflächen an einer Bewegung voneinander weg zu hindern, insbesondere wenn die erste Klemmfläche an der ersten Anlagefläche anliegt und die zweite Klemmfläche an der zweiten Anlagefläche anliegt.

Erfindungsgemäß ist weiterhin ein Haltering vorgesehen, der mittels einer dichtenden Verbindung an dem zweiten Rohrstück angebracht ist, wobei an dem Haltering ein erster Dichtring gehaltert ist, der um die Längsachse, entlang derer sich die Rohrstücke erstrecken, umläuft und daher geschlossen und ringförmig ausgebildet ist. Darüber hinaus ist erfindungsgemäß an dem ersten Rohrstück eine sich entlang der Längsachse erstreckende umlaufende erste Dichtfläche ausgebildet. Die erste Dichtfläche erstreckt sich dabei nicht notwendigerweise über die gesamte Länge des ersten Rohrstücks, sondern lediglich über einen Teil davon. In bevorzugter Weise erstreckt sich die erste Dichtfläche vom freien Ende des ersten Rohrstücks bis zu der am ersten Rohrstück vorgesehenen ersten Endfläche.

Unter einer "dichtenden Verbindung" im Sinne der vorliegenden Erfindung sind allgemein solche Verbindungen zu verstehen, bei denen durch geeignete Maßnahmen entlang der Verbindungsfläche verhindert wird, dass ein Fluid, beispielsweise eine Flüssigkeit oder ein Gas, durch die Verbindungsfläche hindurch tritt. Demnach wird eine "dichtende Verbindung" auch durch die Anlage eines an dem Haltering vorgesehenen Dichtrings an dem zweiten Rohrstück gebildet. Genauso kann eine "dichtende Verbindung" durch eine Schweiß-, Löt- oder eine Pressverbindung gebildet werden. Maßgeblich für die Verwirklichung des Merkmals einer "dichtenden Verbindung" ist somit die Dichtigkeit gegenüber einem Fluidstrom durch die Verbindungsfläche.

Erfindungsgemäß liegt der erste Dichtring an der ersten Dichtfläche an, sodass auch zwischen dem ersten Dichtring und der ersten Dichtfläche eine dichtende Verbindung im Sinne der vorliegenden Erfindung gebildet wird.

Dabei ist die erste Dichtfläche erfindungsgemäß auf der von der Längsachse wegweisenden Außenseite des ersten Rohrstücks ausgebildet, was zunächst mit dem Vorteil verbunden ist, dass die erste Dichtfläche nur in geringem Umfang dem durch die Rohrverbindungsanordnung strömenden Fluid ausgesetzt ist und sich auf ihr daher nur in geringem Umfang Schmutzablagerungen bilden.

Schließlich sind die Klemmschelle, die vorzugsweise mit den Anlageflächen versehen ist, sowie die Klemmflächen derart ausgebildet und angeordnet, dass dann, wenn die erste Klemmfläche an der Klemmschelle und vorzugsweise an der ersten Anlagefläche und die zweite Klemmfläche an der Klemmschelle und vorzugsweise an der zweiten Auflagefläche anliegen, zwischen der ersten Endfläche und der zweiten Endfläche ein Freiraum gebildet ist, sodass sich das erste und das zweite Rohrstück aufeinander zu bewegen und in begrenztem Maße relativ zueinander schwenken können, ohne dass der erste Dichtring außer Anlage mit der ersten Dichtfläche kommt. Dadurch wird schließlich erreicht, dass bei der erfindungsgemäßen Rohrverbindungsanordnung eine Längenzunahme verursacht beispielsweise durch eine thermische Ausdehnung der verwendeten Rohrleitungen, von der Verbindungsanordnung in der Weise aufgenommen werden kann, dass sich die Rohrstücke innerhalb der Klemmschelle in einem durch die Länge des Freiraums bestimmten Umfang aufeinander zu bewegen können. Außerdem können die Rohrstücke aufgrund des Freiraums in begrenztem Umfang gegeneinander verschwenkt werden.

Wie bereits erläutert, wird mit der erfindungsgemäßen Rohrverbindungsanordnung erreicht, dass zum einen Längenveränderungen der miteinander verbundenen Rohrleitungen sowie Änderungen des Winkels zwischen diesen im Bereich der Verbindung aufgenommen werden können und zum anderen dadurch, dass die Dichtfläche, an der der erste Dichtring anliegt, auf der Außenseite des ersten Rohrstücks ausgebildet ist, diese nur in geringem Umfang mit Fluid beaufschlagt wird, sodass es in diesem Bereich zu keinen großen Schmutzablagerungen kommen kann.

An dem ersten Rohrstück ist ein erstes Anschlagelement vorgesehen, das fest, vorzugsweise durch Aufpressen, Verlöten oder Verschweißen, mit dem ersten Rohrstück verbunden ist und an dem die erste Endfläche ausgebildet ist. Mithilfe eines solchen Anschlagelements kann in einfacher Weise realisiert werden, die End- und vorzugsweise auch die Klemmfläche an dem ersten Rohrstück vorzusehen.

In einer weiteren bevorzugten Ausführungsform ist der Haltering fest, vorzugsweise durch Aufpressen, Verlöten oder Verschweißen, mit dem zweiten Rohrstück verbunden. Bei dieser Ausführungsform wird der Haltering damit spielfrei mit dem zweiten Rohrstück verbunden, wobei die dichtende Verbindung durch herkömmliche Fügeverfahren wie Schweißen, Löten oder Aufpressen gebildet werden kann.

Hierbei ist es weiter bevorzugt, wenn die zweite Endfläche an dem fest an dem zweiten Rohrstück angebrachten Haltering ausgebildet ist. Hier ist es besonders bevorzugt, wenn die zweite Endfläche der ersten Endfläche unmittelbar gegenüberliegt, ohne dass sich weitere Bauteile dazwischen befinden. In dieser bevorzugten Ausführungsform wird der Umfang, in dem sich die Rohrstücke ausgehend von der Anordnung, in der die Klemmflächen an den jeweiligen Anlageflächen anliegen, aufeinander zu bewegen können, durch den Abstand der Endflächen an dem Haltering und dem ersten Rohrstück bzw. gegebenenfalls dem ersten Anschlagelement bestimmt.

Wenn der Haltering fest mit dem zweiten Rohrstück verbunden ist, ist es weiter bevorzugt, dass die zweite Klemmfläche auch an dem Haltering ausgebildet ist, wobei diese dann von der zweiten Endfläche wegweist. Ein solcher Aufbau ist fertigungstechnisch leicht durch Befestigen des Halterings an dem Rohrstück zu realisieren, ohne dass weitere Bauteile an dem zweiten Rohrstück angebracht werden müssen.

In einer weiteren bevorzugten Ausführungsform kann an dem zweiten Rohrstück eine sich entlang der Längsachse erstreckende umlaufende zweite Dichtfläche vorgesehen sein, wobei an dem Haltering ein um die Längsachse umlaufender zweiter Dichtring gehaltert ist, der an der zweiten Dichtfläche anliegt, sodass die dichtende Verbindung zwischen dem Haltering und dem zweiten Rohrstück durch den zweiten Dichtring und die zweite Dichtfläche gebildet wird. Bei dieser Ausführungsform wird erreicht, dass aufgrund der durch den zweiten Dichtring und die zweite Dichtfläche gebildeten dichtenden Verbindung zwischen dem Haltering und dem zweiten Rohrstück sich auch das zweite Rohrstück relativ zu der Klemmschelle bewegen kann, sodass beispielsweise thermisch induzierte Längenänderungen der miteinander verbundenen Rohrleitungen besser aufgenommen werden können. Die Beweglichkeit beider Rohrstücke gegenüber der Klemmschelle vergrößert zudem den Umfang, in dem die Rohrstücke gegeneinander verschwenkt werden können.

In weiter bevorzugter Weise kann an dem zweiten Rohrstück ein zweites Anschlagelement vorgesehen sein, das fest, vorzugsweise durch Aufpressen, Verlöten oder Verschweißen, mit dem zweiten Rohrstück verbunden ist und an dem die zweite Endfläche ausgebildet ist, wobei der Haltering zwischen der ersten und der zweiten Endfläche angeordnet ist. Ähnlich wie schon im Zusammenhang mit dem ersten Rohrstück erläutert, kann durch das zweite Anschlagelement in einfacher Weise realisiert werden, an dem zweiten Rohrstück die zweite Endfläche sowie vorzugsweise auch die zweite Klemmfläche vorzusehen, wobei durch den Abstand der beiden Anschlagelemente und die axiale Länge des Halterings der Umfang vorgegeben wird, um den sich die Rohrstücke aufeinander zu bewegen können.

In weiter bevorzugter Weise kann die zweite Dichtfläche zwischen der zweiten Endfläche und einem freien Ende des zweiten Rohrstücks angeordnet sein.

Außerdem ist es hier bevorzugt, dass die Rohrverbindungsanordnung derart ausgebildet ist, dass dann, wenn die erste Klemmfläche an der ersten Anlagefläche und die zweite Klemmfläche an der zweiten Anlagefläche anliegt, zwischen der ersten Endfläche und der zweiten Endfläche in Richtung der Längsachse ein Abstand vorliegt, der größer ist als die Länge des Halterings entlang der Längsrichtung, wobei das erste und das zweite Rohrstück gegenüber der Klemmschelle in Richtung der Längsachse aufeinander zu verschiebbar sind, ohne dass der erste Dichtring außer Anlage mit der ersten Dichtfläche und der zweite Dichtring außer Anlage mit der zweite Dichtfläche kommt. Bei dieser Wahl der Abmessungen ist sichergestellt, dass die Rohrstücke sich ausgehend von der Position, in der die Klemmflächen an den Anlageflächen anliegen, in einem vorgegebenen Umfang aufeinander zu bewegen können, was beispielsweise dann erforderlich sein kann, wenn sich die Rohrstücke bzw. die damit verbundenen Rohrleitungen thermisch ausdehnen.

Nachfolgend wird die vorliegende Erfindung anhand einer Zeichnung erläutert, die lediglich bevorzugte Ausführungsbeispiele zeigt, wobei
- Figur 1: eine Seitenansicht eines ersten Ausführungsbeispiels einer erfindungsgemäßen Rohrverbindungsanordnung zeigt,
- Figur 2: eine Teilschnittansicht des Ausführungsbeispiels aus Figur 1 zeigt und
- Figur 3: eine Teilschnittansicht eines zweiten Ausführungsbeispiels einer erfindungsgemäßen Rohrverbindungsanordnung zeigt.

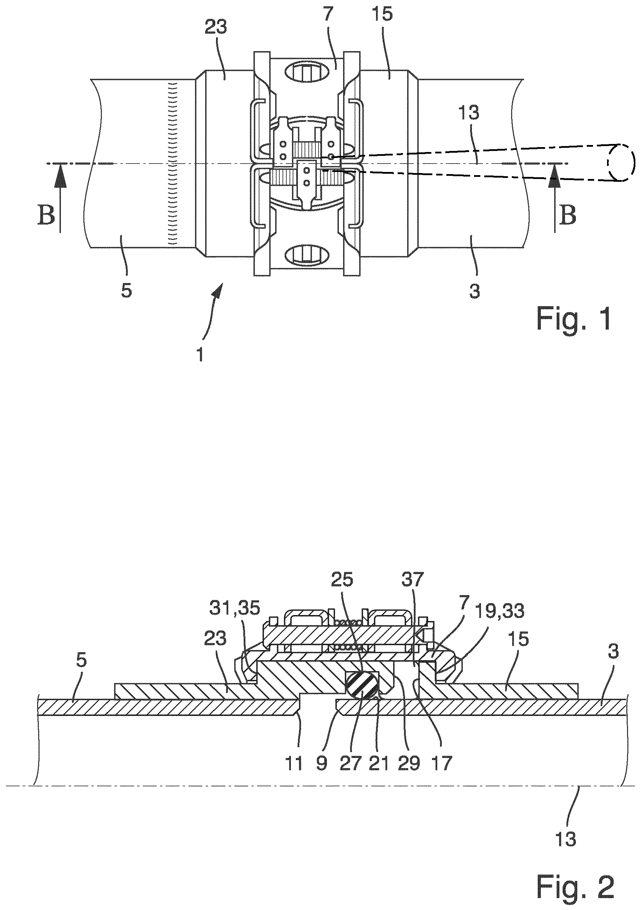

In den Figuren 1 und 2 ist ein erstes Ausführungsbeispiel einer erfindungsgemäßen Rohrverbindungsanordnung 1 gezeigt, wobei die Rohrverbindungsanordnung 1 ein erstes Rohrstück 3 sowie ein zweites Rohrstück 5 aufweist, die mithilfe einer Klemmschelle 7 derart miteinander verbunden sind, dass sich die Rohrstücke 3, 5 innerhalb der Klemmschelle 7 aufeinander zu bewegen können. Außerdem ist die Klemmschelle 7 so bemessen, dass die Rohrstücke 3, 5, wie in Fig. 1 durch den Kegel angedeutet, in begrenztem Umfang gegeneinander verschwenkt werden können.

Die Rohrstücke 3, 5 können Teil von Rohrleitungen sein, wobei sich letztere nicht notwendig gradlinig erstrecken müssen. Lediglich die Rohrstücke 3, 5, die im Bereich ihrer freien Enden 9, 11 miteinander gekoppelt sind, erstrecken sich in unmittelbarer Nähe dieser freien Enden 9,11 entlang einer gemeinsamen Längsachse 13. Somit muss eine erfindungsgemäße Rohrverbindungsanordnung 1 keine Rohrstücke 3, 5 aufweisen, die sich über eine größere Länge gradlinig entlang einer Längsachse erstrecken. Es ist vielmehr vollkommen ausreichend, wenn in unmittelbarer Nähe der freien Enden 9, 11, also beispielsweise in dem von der Klemmschelle 7 umschlossenen Bereichs, jeweils ein geradliniger Abschnitt vorgesehen ist, wobei sich diese Abschnitte entlang einer gemeinsamen Längsachse 13 erstrecken, sodass diese Abschnitte dann die Rohrstücke 3, 5 im Sinne der vorliegenden Erfindung bilden.

Wie weiter Figur 2 zu entnehmen ist, ist an dem ersten Rohrstück 3 ein erstes Anschlagelement 15 angeschweißt, wobei es aber auch denkbar ist, dass das erste Anschlagelement 15 einfach auf das erste Rohrstück 3 aufgepresst oder mit diesem verlötet ist. Jedenfalls soll eine feste Verbindung zwischen dem ersten Anschlagelement 15 und dem ersten Rohrstück 3 vorliegen, die gewährleistet, dass sich das Anschlagelement 15 nicht gegenüber dem ersten Rohrstück 3 verschieben lässt.

An dem ersten Anschlagelement 15 ist eine erste Endfläche 17 vorgesehen, die sich in dem hier dargestellten bevorzugten Ausführungsbeispiel im Wesentlichen senkrecht zu der Längsachse 13 erstreckt und um das erste Rohrstück 3 umläuft. Außerdem weist die erste Endfläche 17 hin zu dem zweiten Rohrstück 5. Darüber hinaus ist an dem ersten Anschlagelement 15 noch eine von der ersten Endfläche 17 wegweisende erste Klemmfläche 19 vorgesehen, die in dem hier dargestellten bevorzugten Ausführungsbeispiel ebenfalls senkrecht zu der Längsachse 13 verläuft. Schließlich ist in Figur 2 zu erkennen, dass zwischen der ersten Endfläche 17 und dem freien Ende 9 des ersten Rohrstücks 3 an der von dem Inneren des ersten Rohrstücks 3 wegweisenden Außenseite davon eine erste Dichtfläche 21 ausgebildet ist, d. h. dieser Abschnitt der Außenseite des ersten Rohrstücks 3 ist derart ausgestaltet, dass beim Zusammenwirken mit einem Dichtring eine dichtende Verbindung geschaffen wird.

Weiterhin ist der Figur 2 zu entnehmen, dass an dem zweiten Rohrstück 5 ein Haltering 23 durch Verschweißen mit dem Endabschnitt des zweiten Rohrstücks 5 befestigt ist, wobei durch die Schweißverbindung zwischen dem zweiten Rohrstück 5 und dem Haltering 23 zwischen diesen eine dichtenden Verbindung geschaffen ist, durch die verhindert wird, dass sich im Inneren der Rohrstücke 3, 5 befindliches Fluid durch die Verbindungsfläche zwischen dem Haltering 23 und der Außenseite des zweiten Rohrstücks 5 nach außen gelangen kann. In dem Haltering 23 ist eine nach innen weisende umlaufende Nut 25 ausgebildet, in der wiederum ein erster Dichtring 27 aufgenommen ist, der ebenfalls um die Längsachse 13 umläuft und an der ersten Dichtfläche 21 anliegt, sodass zwischen dem ersten Dichtring 27 und der ersten Dichtfläche 21 eine dichtende Verbindung ausgebildet ist.

Weiterhin ist an dem Haltering 23 an dessen freiem Ende eine zweite Endfläche 29 ausgebildet, die senkrecht zu der Längsachse 13 verläuft und ebenfalls um die Längsachse 13 umläuft, wobei sie der ersten Endfläche 17 hier unmittelbar gegenüberliegt.

Schließlich weist der Haltering 23 eine zweite Klemmfläche 31 auf, die von der zweiten Endfläche 29 weg weist und ebenfalls senkrecht zu der Längsachse 13 verläuft und um die Längsachse 13 umläuft.

Figur 2 ist weiter zu entnehmen, dass die Klemmschelle 7, die in an sich bekannter Weise aus zwei Halbschalen ausgebildet ist, eine erste Anlagefläche 33 sowie eine zweite Anlagefläche 35 aufweist, die in dem hier beschriebenen bevorzugten Ausführungsbeispiel ebenfalls senkrecht zu der Längsachse 13 verlaufen und derart ausgestaltet sind, dass die erste Anlagefläche 33 an der ersten Klemmfläche 19 anliegen kann, während die zweite Anlagefläche 35 an der zweiten Klemmfläche 31 anliegen kann. Wenn die Anlageflächen 33, 35 in dieser Weise an den Klemmflächen 19, 31 anliegen, sind die Rohrstücke 3, 5 an einer Bewegung voneinander weg entlang der Längsachse 13 gehindert. Darüber hinaus sind der Haltering 23 und das erste Anschlagelement 15 derart bemessen, dass dann, wenn die Klemmflächen 19, 31 an den Anlagefläche 33, 35 anliegen, zwischen der ersten Endfläche 17 und der zweiten Endfläche 29 ein Freiraum 37 gebildet ist. Aufgrund dieses Freiraums 37 können sich die Rohrstücke 3, 5 innerhalb der Klemmschelle 7 um ein gewisses Maß aufeinander zu bewegen, sodass dadurch Längenänderungen, beispielsweise aufgrund einer thermischen Ausdehnung der mit den Rohrstücken 3, 5 verbundenen Rohrleitungen, kompensiert werden können. Bei einer derartigen Bewegung bleibt der erste Dichtring 27 in Anlage mit der ersten Dichtfläche 21, gleitet aber an dieser entlang. Durch den Freiraum 37 ist es zudem möglich, dass die Rohrstücke 3, 5 zumindest in begrenztem Umfang gegeneinander verschwenkt werden, sodass auch eine Änderung des Winkels zwischen den Rohrstücken 3, 5 möglich ist. Dies ist durch den Kegel in Figur 1 wiedergegeben. Da außerdem die erste Dichtfläche 21 auf der dem Inneren der Rohrstücke 3, 5 abgewandten Seite der Rohrstücke 3, 5 ausgebildet ist, kommt diese Dichtfläche 21 nur in geringem Umfang mit dem Fluid in Kontakt, das in den Rohrstücken 3, 5 geführt ist. Dadurch wiederum ist die Gefahr von Ablagerungen an der ersten Dichtfläche 21 gering.

Schließlich sind die senkrecht zur Längsachse 13 verlaufenden Flächen an dem ersten und dem zweiten Rohrstück 3, 5 vergleichsweise klein, sodass ein unter Druck stehendes Fluid im Inneren der Rohrstücke 3, 5 diese nur mit einer geringen Kraft beaufschlagen kann, durch die die Rohrstücke 3, 5 voneinander wegbewegt würden. Ein Auseinanderpressen der Rohrstücke 3, 5 innerhalb der Klemmschelle 7 findet somit bei dem hier beschriebenen Ausführungsbeispiel nur in sehr geringem Umfang statt.

Um die beiden Rohrstücke 3, 5 des ersten Ausführungsbeispiels zu einer Rohrverbindungsanordnung 1 gemäß dem ersten Ausführungsbeispiel miteinander zu verbinden, wird zunächst das erste Rohrstück 3 mit dessen freiem Ende 9 in den Haltering 23 eingeschoben, sodass die an dem ersten Rohrstück 3 ausgebildete erste Dichtfläche 21 zur Anlage mit dem ersten Dichtring 27 kommt, wobei das erste Rohrstück 3 dann soweit eingeschoben wird, dass der Abstand der ersten und zweiten Klemmflächen 19, 31 kleiner oder gleich dem Abstand der Anlageflächen 33, 35 an der Klemmschelle 7 ist. Anschließend wird die Klemmschelle 7 um den Haltering 23 und das erste Anschlagelement 15 gelegt, sodass sich die Rohrstücke 3, 5 nicht mehr voneinander wegbewegen können. Auf diese Weise wird eine Verbindung zwischen den beiden Rohrstücken 3, 5 geschaffen, die zudem aufgrund des Freiraums 37 Längen- und Winkelveränderungen der mit den Rohrstücken 3, 5 verbundenen Rohrleitungen aufnehmen kann.

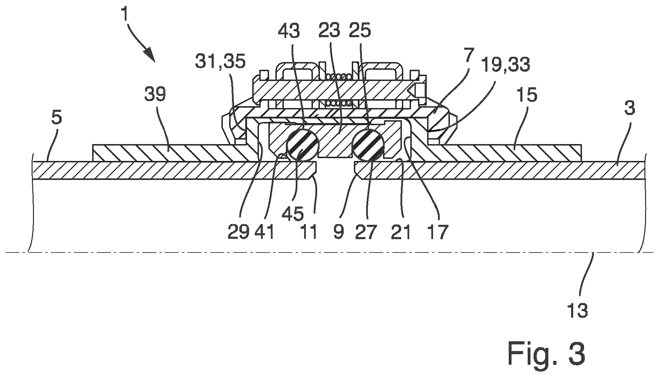

In Figur 3 ist ein zweites Ausführungsbeispiel einer erfindungsgemäßen Rohrverbindungsanordnung 1 in einer teilweisen Querschnittsansicht gezeigt, wobei auch dieses Ausführungsbeispiel ein erstes Rohrstück 3 und ein zweites Rohrstück 5 aufweist, die sich, jedenfalls im Bereich der Verbindungsanordnung und des von der Klemmschelle 7 umschlossenen Bereichs, entlang einer gemeinsamen Längsachse 13 erstrecken.

Ähnlich dem ersten Ausführungsbeispiel ist an dem ersten Rohrstück 3 ein erstes Anschlagelement 15 angeschweißt, an dem eine erste Endfläche 17 sowie eine erste Klemmfläche 19 ausgebildet sind, die, wie bei dem ersten Ausführungsbeispiel auch, im Wesentlichen senkrecht zu der Längsachse 13 verlaufen und um diese umlaufen.

Weiterhin weist das erste Rohrstück 3 eine erste Dichtfläche 21 auf, die auf der von dem Innenraum des ersten Rohrstücks 3 wegweisenden Seite von dessen Wandung und damit auf der Außenseite angeordnet und zwischen der ersten Endfläche 17 und dem freien Ende 9 des ersten Rohrstücks 3 umlaufend um dieses ausgebildet ist.

Im Unterschied zu dem ersten Ausführungsbeispiel ist auch an dem zweiten Rohrstück 5 ein zweites Anschlagelement 39 angeschweißt. Es ist aber auch denkbar, dass das zweite Anschlagelement 39 benachbart zu dem freien Ende 11 des zweiten Rohrstücks 5 auf dieses aufgepresst oder mit diesem verlötet wird. In jedem Fall ist jedoch eine feste Verbindung zwischen dem zweiten Rohrstück 5 und dem zweiten Anschlagelement 39 vorgesehen. An dem zweiten Anschlagelement 39 ist eine zu der ersten Endfläche 17 weisende zweite Endfläche 29 ausgebildet, die in diesem Ausführungsbeispiel im Wesentlichen senkrecht zu der Längsachse 13 verläuft und um diese umläuft. Außerdem weist das zweite Anschlagelement 39 eine zweite Klemmfläche 31 auf, die von der zweiten Endfläche 29 weg weist und ebenfalls senkrecht zu der Längsachse 13 und um diese umlaufend ausgestaltet ist.

Schließlich ist zwischen der zweiten Endfläche 29 und dem freien Ende 11 des zweiten Rohrstücks 5 eine zweite Dichtfläche 41 ausgebildet, die auf der von dem Innenraum des zweiten Rohrstücks 5 wegweisenden Außenseite davon vorgesehen ist.

Ferner ist Figur 3 zu entnehmen, dass ein Haltering 23 vorgesehen ist, der eine nach Innen weisende erste Nut 25 sowie eine ebenfalls nach Innen weisende zweite Nut 43 aufweist. In der ersten Nut 25 ist wiederum ein erster Dichtring 27 angeordnet, der die erste Dichtfläche 21 umgibt und an dieser anliegt. In der zweiten Nut 43 ist ein zweiter Dichtring 45 angeordnet, der um die an dem zweiten Rohrstück 5 ausgebildete zweite Dichtfläche 41 umläuft und an dieser dichtend anliegt. Auf diese Weise wird zwischen dem Haltering 23 und dem zweiten Rohrstück 5 wiederum eine dichtende Verbindung hergestellt, da durch die Anlage des zweiten Dichtrings 45 an der zweiten Dichtfläche 41 erreicht wird, dass das Innere des ersten und des zweiten Rohrstücks 3, 5 zwischen dem ersten Rohrstück 3 und dem zweiten Rohrstück 5 gegenüber der Umgebung abgedichtet ist. Insbesondere stellt die Anlage des zweiten Dichtrings 45 sowie dessen Aufnahme in der zweiten Nut 43 sicher, dass zwischen dem zweiten Dichtring 43 und der zweiten Dichtfläche 41 einerseits sowie dem zweiten Dichtring 45 und der zweiten Nut 43 andererseits kein Fluid aus dem Inneren der Rohrstücke 3, 5 durch den Bereich zwischen den beiden Endflächen 9, 11 austreten kann.

Schließlich ist auch bei diesem Ausführungsbeispiel eine Klemmschelle 7 vorgesehen, an der eine erste Anlagefläche 33 vorgesehen ist, die der ersten Klemmfläche 19 gegenüberliegt. Darüber hinaus ist auch hier an der Klemmschelle 7 eine zweite Anlagefläche 35 ausgebildet, die der an dem zweiten Anschlagelement 39 vorgesehenen zweiten Klemmfläche 31 gegenüberliegt, wenn die Klemmschelle 7 um die Rohrstücke 3, 5 herum gelegt ist.

Wenn die Klemmflächen 19, 31 an den Anlageflächen 33, 35 anliegen, sind die Endflächen 17, 29 an dem ersten Anschlagelement 15 und dem zweiten Anschlagelement 39 so weit voneinander entfernt, dass dieser Abstand größer als die axiale Länge gemessen in Richtung der Längsachse 13 des Halterings 23 ist. Da auch die freien Enden 9, 11 der Rohrstücke 3, 5 voneinander beabstandet sind, können sich die Rohrstücke aufgrund des zwischen den Endflächen 17, 29 und dem Haltering 23 ausgebildeten Freiraum aufeinander zu bewegen, wenn sich die mit den Rohrstücken 3, 5 verbundenen Rohrleitungen thermisch ausdehnen. Außerdem ist auch hier eine begrenzte Veränderung des Winkels zwischen den Rohrstücken 3, 5 möglich. Dabei bleibt der erste Dichtring 27 aber immer in Anlage mit der ersten Dichtfläche 21 und der zweite Dichtring 45 mit der zweiten Dichtfläche 41.

Auch bei diesem zweiten Ausführungsbeispiel sind die Dichtflächen 21, 41 auf der von dem Fluid abgewandten Seite der Rohrstücke 3, 5 ausgebildet, sodass diese Dichtflächen nur in geringem Maße mit dem Fluid in Kontakt kommen und sich dort auch nur geringe Mengen von Schmutz ablagert, der eine Verschiebung der Dichtring 27, 45 gegenüber den Dichtflächen 21,41 behindern könnte.

Um die Rohrstücke 3, 5 bei diesem zweiten Ausführungsbeispiel miteinander zu verbinden, werden deren freie Enden 9, 11 zunächst in das Innere des Haltering 23 soweit eingeschoben, dass die Klemmflächen 19, 31 an den Anschlagelement 15, 39 einen geringeren Abstand voneinander haben als die Anlagefläche 33, 35 an der Klemmschelle 7. Anschließend werden die Schalen der Klemmschelle 7 um die Anschlagelemente 15, 30 herum gelegt und verschlossen, sodass damit die Verbindung hergestellt ist.

### Bezugszeichenliste:

- 1: Rohrverbindungsanordnung
- 3: erstes Rohrstück
- 5: zweites Rohrstück
- 7: Klemmschelle
- 9: freies Ende - erstes Rohrstück
- 11: freies Ende - zweites Rohrstück
- 13: Längsachse
- 15: erstes Anschlagelement
- 17: erste Endfläche
- 19: erste Klemmfläche
- 21: erste Dichtfläche
- 23: Haltering
- 25: erste Nut
- 27: erster Dichtring
- 29: zweite Endfläche
- 31: zweite Klemmfläche
- 33: erste Anlagefläche
- 35: zweite Anlagefläche
- 37: Freiraum
- 39: zweites Anschlagelement
- 41: zweite Dichtfläche
- 43: zweite Nut
- 45: zweiter Dichtring

## Patentansprüche

1. Rohrverbindungsanordnung mit einem ersten Rohrstück (3) und einem zweiten Rohrstück (5), die sich entlang einer Längsachse (13) erstrecken, und mit einer Klemmschelle (7),
wobei die Klemmschelle (7) ausgestaltet ist, das erste und das zweite Rohrstück (3, 5) miteinander zu verbinden und an einer Bewegung entlang der Längsachse (13) voneinander weg zu hindern,
wobei ein Haltering (23) vorgesehen ist, der mittels einer dichtenden Verbindung an dem zweiten Rohrstück (5) angebracht ist und an dem ein um die Längsachse (13) umlaufender erster Dichtring (27) gehaltert ist,
wobei an dem ersten Rohrstück (3) eine sich entlang der Längsachse (13) erstreckende umlaufende erste Dichtfläche (21) vorgesehen ist, an der der erste Dichtring (27) anliegt,
wobei durch die dichtende Verbindung und das Anliegen des ersten Dichtrings (27) an der ersten Dichtfläche (21) das Innere des ersten und des zweiten Rohrstücks (3, 5) zwischen dem ersten Rohrstück (3) und dem zweiten Rohrstück (5) gegenüber der Umgebung abgedichtet ist,
wobei, wenn eine erste Klemmfläche (19) an dem ersten Rohrstück (3) und eine zweite Klemmfläche (31) an dem zweiten Rohrstück (5) an der Klemmschelle (7) anliegen, zwischen einer ersten Endfläche (17) an dem ersten Rohrstück (3) und einer zweiten Endfläche (29) an dem zweiten Rohrstück ein Freiraum (37) ausgebildet ist und sich das erste und zweite Rohrstück (3, 5) aufeinander zu bewegen können, ohne dass der erste Dichtring (27) außer Anlage mit der ersten Dichtfläche (21) kommt,
**dadurch gekennzeichnet,**
**dass** die erste Dichtfläche (21) auf der von der Längsachse (13) wegweisenden Außenseite des ersten Rohrstücks (3) vorgesehen ist,
wobei an dem ersten Rohrstück (3) ein erstes Anschlagelement (15) vorgesehen ist, das fest mit dem ersten Rohrstück (3) verbunden ist und an dem die erste Endfläche (17) ausgebildet ist, und
wobei die erste Klemmfläche (19) an dem ersten Anschlagelement (15) ausgebildet ist.

2. Rohrverbindungsanordnung nach Anspruch 1, wobei an dem ersten Rohrstück (3) die erste Endfläche (17) vorgesehen ist und an dem zweiten Rohrstück (5) die zweite Endfläche (29) vorgesehen ist und
wobei die erste Endfläche (17) der zweiten Endfläche (29) gegenüberliegt.

3. Rohrverbindungsanordnung nach Anspruch 1 oder 2, wobei die an dem ersten Rohrstück (3) vorgesehene erste Klemmfläche (19) von der ersten Endfläche (17) wegweist und die an dem zweiten Rohrstück (5) vorgesehene zweite Klemmfläche (31) von der zweiten Endfläche (29) wegweist.

4. Rohrverbindungsanordnung nach einem oder mehreren der Ansprüche 1 bis 3, wobei die Klemmschelle (7) eine erste Anlagefläche (33) und eine zweite Anlagefläche (35) aufweist,
wobei die erste Anlagefläche (33) ausgestaltet ist, an der ersten Klemmfläche (19) anzuliegen, und die zweite Anlagefläche (35) ausgestaltet ist, an der zweiten Klemmfläche (31) anzuliegen,
wobei die Klemmschelle (7) ausgestaltet ist, die Klemmflächen (19, 31) an einer Bewegung voneinander weg zu hindern, wenn die erste Klemmfläche (19) an der ersten Anlagefläche (33) anliegt und die zweite Klemmfläche (31) an der zweiten Anlagefläche (35) anliegt, und
wobei, wenn die erste Klemmfläche (19) an der ersten Anlagefläche (33) und die zweite Klemmfläche (31) an der zweiten Anlagefläche (35) anliegt, zwischen der ersten Endfläche (17) und der zweiten Endfläche (29) der Freiraum (37) ausgebildet ist und sich das erste und zweite Rohrstück (3, 5) aufeinander zu bewegen können, ohne dass der erste Dichtring (27) außer Anlage mit der ersten Dichtfläche (21) kommt

5. Rohrverbindungsanordnung nach einem oder mehreren der Ansprüche 1 bis 4, wobei die erste Dichtfläche (21) zwischen der ersten Endfläche (17) und einem freien Ende (9) des ersten Rohrstücks (3) angeordnet ist.

6. Rohrverbindungsanordnung nach einem oder mehreren der Ansprüche 1 bis 5, wobei der Haltering (23) fest, vorzugsweise durch Aufpressen, Verlöten oder Verschweißen, mit dem zweiten Rohrstück (5) verbunden ist.

7. Rohrverbindungsanordnung nach Anspruch 6, wobei die zweite Endfläche (29) an dem Haltering (23) ausgebildet ist.

8. Rohrverbindungsanordnung nach Anspruch 6 oder 7, wobei die zweite Klemmfläche (31) an dem Haltering (23) ausgebildet ist.

9. Rohrverbindungsanordnung nach einem oder mehreren der Ansprüche 1 bis 5, wobei an dem zweiten Rohrstück (5) eine sich entlang der Längsachse (13) erstreckende umlaufende zweite Dichtfläche (41) vorgesehen ist und
wobei an dem Haltering (23) ein um die Längsachse (13) umlaufender zweiter Dichtring (45) gehaltert ist, der an der zweiten Dichtfläche (41) anliegt, sodass die dichtende Verbindung zwischen dem Haltering (23) und dem zweiten Rohrstück (5) durch den zweiten Dichtring (45) und die zweite Dichtfläche (41) gebildet wird.

10. Rohrverbindungsanordnung nach Anspruch 9, wobei an dem zweiten Rohrstück (5) ein zweites Anschlagelement (39) vorgesehen ist, das fest, vorzugsweise durch Aufpressen, Verlöten oder Verschweißen, mit dem zweiten Rohrstück (5) verbunden ist und an dem die zweite Endfläche (29) ausgebildet ist,
wobei der Haltering (23) zwischen der ersten und der zweiten Endfläche (17, 29) angeordnet ist.

11. Rohrverbindungsanordnung nach Anspruch 10, wobei die zweite Klemmfläche (31) an dem zweiten Anschlagelement (39) ausgebildet ist.

12. Rohrverbindungsanordnung nach Anspruch 10 oder 11, wobei die zweite Dichtfläche (41) zwischen der zweiten Endfläche (29) und einem freien Ende (11) des zweiten Rohrstücks (5) angeordnet ist.

13. Rohrverbindungsanordnung nach einem oder mehreren der Ansprüche 10 bis 12, wobei, wenn die erste Klemmfläche (19) an der ersten Anlagefläche (33) und die zweite Klemmfläche (31) an der zweiten Anlagefläche (35) anliegt, zwischen der ersten Endfläche (17) und der zweiten Endfläche (29) in Richtung der Längsachse (13) ein Abstand ist, der größer ist als die Länge des Halterings (23) entlang der Längsachse (13), und
wobei das erste und das zweite Rohrstück (3, 5) gegenüber der Klemmschelle (7) in Richtung der Längsachse (13) aufeinander zu verschiebbar sind, ohne dass der erste Dichtring (27) außer Anlage mit der ersten Dichtfläche (21) und der zweite Dichtring (45) außer Anlage mit der zweiten Dichtfläche (41) kommt.

## Claims

1. Pipe-connecting arrangement having a first pipe piece (3) and having a second pipe piece (5), which extend along a longitudinal axis (13), and having a clamping clip (7),
wherein the clamping clip (7) is configured to connect the first and second pipe pieces (3, 5) to one another, and to prevent them from moving away from one another along the longitudinal axis (13),
wherein provision is made of a holding ring (23) which is attached by means of a sealing connection to the second pipe piece (5) and against which a first sealing ring (27) running around the longitudinal axis (13) in an encircling manner is held,
wherein, on the first pipe piece (3), provision is made of an encircling first sealing surface (21) which extends along the longitudinal axis (13) and against which the first sealing ring (27) abuts,
wherein, as a result of the sealing connection and the abutment of the first sealing ring (27) against the first sealing surface (21), the interior of the first and second pipe pieces (3, 5) is sealed off with respect to the surroundings between the first pipe piece (3) and the second pipe piece (5),
wherein, when a first clamping surface (19) on the first pipe piece (3) and a second clamping surface (31) on the second pipe piece (5) abut against the clamping clip (7), a clearance (37) is formed between a first end surface (17) on the first pipe piece (3) and a second end surface (29) on the second pipe piece and the first and second pipe pieces (3, 5) can move towards one another without the first sealing ring (27) coming out of abutment with the first sealing surface (21),
**characterized**
**in that** the first sealing surface (21) is provided on the outer side, facing away from the longitudinal axis (13), of the first pipe piece (3),
wherein, on the first pipe piece (3), provision is made of a first stop element (15) which is connected fixedly to the first pipe piece (3) and on which the first end surface (17) is formed, and
wherein the first clamping surface (19) is formed on the first stop element (15).

2. Pipe-connecting arrangement according to Claim 1, wherein the first end surface (17) is provided on the first pipe piece (3) and the second end surface (29) is provided on the second pipe piece (5), and
wherein the first end surface (17) is situated opposite the second end surface (29).

3. Pipe-connecting arrangement according to Claim 1 or 2, wherein the first clamping surface (19) provided on the first pipe piece (3) faces away from the first end surface (17) and the second clamping surface (31) provided on the second pipe piece (5) faces away from the second end surface (29).

4. Pipe-connecting arrangement according to one or more of Claims 1 to 3, wherein the clamping clip (7) has a first abutment surface (33) and a second abutment surface (35),
wherein the first abutment surface (33) is configured to abut against the first clamping surface (19), and the second abutment surface (35) is configured to abut against the second clamping surface (31),
wherein the clamping clip (7) is configured to prevent the clamping surfaces (19, 31) from moving away from one another when the first clamping surface (19) abuts against the first abutment surface (33) and the second clamping surface (31) abuts against the second abutment surface (35), and
wherein, when the first clamping surface (19) abuts against the first abutment surface (33) and the second clamping surface (31) abuts against the second abutment surface (35), the clearance (37) is formed between the first end surface (17) and the second end surface (29) and the first and second pipe pieces (3, 5) can move towards one another without the first sealing ring (27) coming out of abutment with the first sealing surface (21).

5. Pipe-connecting arrangement according to one or more of Claims 1 to 4, wherein the first sealing surface (21) is arranged between the first end surface (17) and a free end (9) of the first pipe piece (3).

6. Pipe-connecting arrangement according to one or more of Claims 1 to 5, wherein the holding ring (23) is connected fixedly, preferably by pressing-on, soldering or welding, to the second pipe piece (5).

7. Pipe-connecting arrangement according to Claim 6, wherein the second end surface (29) is formed on the holding ring (23).

8. Pipe-connecting arrangement according to Claim 6 or 7, wherein the second clamping surface (31) is formed on the holding ring (23).

9. Pipe-connecting arrangement according to one or more of Claims 1 to 5, wherein, on the second pipe piece (5), provision is made of an encircling second sealing surface (41) which extends along the longitudinal axis (13), and wherein a second sealing ring (45) which runs around the longitudinal axis (13) in an encircling manner is held against the holding ring (23) and abuts against the second sealing surface (41), so that the sealing connection between the holding ring (23) and the second pipe piece (5) is formed by the second sealing ring (45) and the second sealing surface (41).

10. Pipe-connecting arrangement according to Claim 9, wherein, on the second pipe piece (5), provision is made of a second stop element (39) which is connected fixedly, preferably by pressing-on, soldering or welding, to the second pipe piece (5) and on which the second end surface (29) is formed,
wherein the holding ring (23) is arranged between the first and second end surfaces (17, 29).

11. Pipe-connecting arrangement according to Claim 10, wherein the second clamping surface (31) is formed on the second stop element (39).

12. Pipe-connecting arrangement according to Claim 10 or 11, wherein the second sealing surface (41) is arranged between the second end surface (29) and a free end (11) of the second pipe piece (5).

13. Pipe-connecting arrangement according to one or more of Claims 10 to 12, wherein, when the first clamping surface (19) abuts against the first abutment surface (33) and the second clamping surface (31) abuts against the second abutment surface (35), there is a spacing between the first end surface (17) and the second end surface (29) in the direction of the longitudinal axis (13) that is larger than the length of the holding ring (23) along the longitudinal axis (13), and
wherein the first and second pipe pieces (3, 5) are displaceable towards one another in the direction of the longitudinal axis (13) in relation to the clamping clip (7) without the first sealing ring (27) coming out of abutment with the first sealing surface (21) and the second sealing ring (45) coming out of abutment with the second sealing surface (41).

## Revendications

1. Dispositif de raccordement de tuyaux avec une première pièce tubulaire (3) et une deuxième pièce tubulaire (5) s'étendant le long d'un axe longitudinal (13), et avec un collier de serrage (7),
le collier de serrage (7) étant configuré pour raccorder la première et la deuxième pièce tubulaire (3, 5) entre elles et les empêcher de s'éloigner l'une de l'autre le long de l'axe longitudinal (13),
il étant prévu une bague de maintien (23) qui est montée sur la deuxième pièce tubulaire (5) au moyen d'un raccordement étanche et sur laquelle est maintenue une première bague d'étanchéité (27) s'étendant autour de l'axe longitudinal (13),
une première surface d'étanchéité périphérique (21) qui s'étend le long de l'axe longitudinal (13) étant prévue sur la première pièce tubulaire (3), contre laquelle s'applique la première bague d'étanchéité (27),
grâce au raccordement étanche et à l'application de la première bague d'étanchéité (27) contre la première surface d'étanchéité (21), l'intérieur de la première et de la deuxième pièce tubulaire (3, 5) étant rendu étanche par rapport à l'environnement entre la première pièce tubulaire (3) et la deuxième pièce tubulaire (5),
lorsqu'une première surface de serrage (19) sur la première pièce tubulaire (3) et une deuxième surface de serrage (31) sur la deuxième pièce tubulaire (5) s'appliquent contre le collier de serrage (7), un espace libre (37) étant réalisé entre une première surface d'extrémité (17) sur la première pièce tubulaire (3) et une deuxième surface d'extrémité (29) sur la deuxième pièce tubulaire, et la première et la deuxième pièce tubulaire (3, 5) pouvant se déplacer l'une vers l'autre sans que la première bague d'étanchéité (27) ne vienne à perdre son application contre la première surface d'étanchéité (21),
**caractérisé**
**en ce que** la première surface d'étanchéité (21) est prévue sur le côté extérieur de la première pièce tubulaire (3) orienté à l'opposé de l'axe longitudinal (13),
un premier élément de butée (15) étant prévu sur la première pièce tubulaire (3), lequel est raccordé de manière fixe à la première pièce tubulaire (3) et sur lequel est réalisée la première surface d'extrémité (17), et
la première surface de serrage (19) étant réalisée sur le premier élément de butée (15).

2. Dispositif de raccordement de tuyaux selon la revendication 1, la première surface d'extrémité (17) étant prévue sur la première pièce tubulaire (3) et la deuxième surface d'extrémité (29) étant prévue sur la deuxième pièce tubulaire (5),
la première surface d'extrémité (17) étant opposée à la deuxième surface d'extrémité (29).

3. Dispositif de raccordement de tuyaux selon la revendication 1 ou 2, la première surface de serrage (19) prévue sur la première pièce tubulaire (3) étant orientée à l'opposé de la première surface d'extrémité (17) et la deuxième surface de serrage (31) prévue sur la deuxième pièce tubulaire (5) étant orientée à l'opposé de la deuxième surface d'extrémité (29).

4. Dispositif de raccordement de tuyaux selon une ou plusieurs des revendications 1 à 3, le collier de serrage (7) présentant une première surface d'application (33) et une deuxième surface d'application (35),
la première surface d'application (33) étant configurée pour venir en application contre la première surface de serrage (19) et la deuxième surface d'application (35) étant configurée pour venir en application contre la deuxième surface de serrage (31),
le collier de serrage (7) étant conçu pour empêcher les surfaces de serrage (19, 31) de s'éloigner l'une de l'autre lorsque la première surface de serrage (19) est appliquée contre la première surface d'application (33) et que la deuxième surface de serrage (31) est appliquée contre la deuxième surface d'application (35), et
lorsque la première surface de serrage (19) est appliquée contre la première surface d'application (33) et la deuxième surface de serrage (31) est appliquée contre la deuxième surface d'application (35), l'espace libre (37) étant réalisé entre la première surface d'extrémité (17) et la deuxième surface d'extrémité (29) et la première et la deuxième pièce tubulaire (3, 5) pouvant se déplacer l'une vers l'autre sans que la première bague d'étanchéité (27) ne vienne à perdre son application contre la première surface d'étanchéité (21).

5. Dispositif de raccordement de tuyaux selon une ou plusieurs des revendications 1 à 4, la première surface d'étanchéité (21) étant disposée entre la première surface d'extrémité (17) et une extrémité libre (9) de la première pièce tubulaire (3).

6. Dispositif de raccordement de tuyaux selon une ou plusieurs des revendications 1 à 5, la bague de maintien (23) étant raccordée de manière fixe, de préférence par emmanchement, brasage ou soudage, à la deuxième pièce tubulaire (5).

7. Dispositif de raccordement de tuyaux selon la revendication 6, la deuxième surface d'extrémité (29) étant réalisée sur la bague de maintien (23).

8. Dispositif de raccordement de tuyaux selon la revendication 6 ou 7, la deuxième surface de serrage (31) étant réalisée sur la bague de maintien (23).

9. Dispositif de raccordement de tuyaux selon une ou plusieurs des revendications 1 à 5, une deuxième surface d'étanchéité périphérique (41) s'étendant le long de l'axe longitudinal (13) étant prévue sur la deuxième pièce tubulaire (5), et
une deuxième bague d'étanchéité (45) s'étendant autour de l'axe longitudinal (13) étant maintenue sur la bague de maintien (23), qui s'applique contre la deuxième surface d'étanchéité (41), de telle sorte que le raccordement étanche entre la bague de maintien (23) et la deuxième pièce tubulaire (5) est formé par la deuxième bague d'étanchéité (45) et la deuxième surface d'étanchéité (41).

10. Dispositif de raccordement de tuyaux selon la revendication 9, un deuxième élément de butée (39) étant prévu sur la deuxième pièce tubulaire (5), lequel est raccordé de manière fixe, de préférence par emmanchement, brasage ou soudage, à la deuxième pièce tubulaire (5) et sur lequel est réalisée la deuxième surface d'extrémité (29),
la bague de maintien (23) étant disposée entre la première et la deuxième surface d'extrémité (17, 29).

11. Dispositif de raccordement de tuyaux selon la revendication 10, la deuxième surface de serrage (31) étant réalisée sur le deuxième élément de butée (39).

12. Dispositif de raccordement de tuyaux selon la revendication 10 ou 11, la deuxième surface d'étanchéité (41) étant disposée entre la deuxième surface d'extrémité (29) et une extrémité libre (11) de la deuxième pièce tubulaire (5).

13. Dispositif de raccordement de tuyaux selon une ou plusieurs des revendications 10 à 12, lorsque la première surface de serrage (19) s'applique contre la première surface de butée (33) et la deuxième surface de serrage (31) s'applique contre la deuxième surface de butée (35), une distance entre la première surface d'extrémité (17) et la deuxième surface d'extrémité (29) existant dans la direction de l'axe longitudinal (13), qui est supérieure à la longueur de la bague de maintien (23) le long de l'axe longitudinal (13), et
la première et la deuxième pièce tubulaire (3, 5) pouvant être déplacées l'une vers l'autre par rapport au collier de serrage (7) dans la direction de l'axe longitudinal (13) sans que la première bague d'étanchéité (27) ne vienne à perdre son application contre la première surface d'étanchéité (21) et que la deuxième bague d'étanchéité (45) ne vienne à perdre son application contre la deuxième surface d'étanchéité (41).
